# FASCICULE DE BREVET EUROPEEN

(11) **EP 0 821 173 B1**
(45) Date de publication et mention de la délivrance du brevet: **13.03.2002**
(21) Numéro de dépôt: 97111605.8
(22) Date de dépôt: 09.07.1997
(51) Int. Cl.: F16D 13/70

(54) **Couvercle d'embrayage multifixations**
Kupplungsgehäuse mit Mehrfach-Befestigungsmöglichkeit
Multiple mounting clutch cover

(30) Priorité: 22.07.1996 FR 9609170
(43) Date de publication de la demande: 28.01.1998
(73) Titulaire: VALEO, 75017 Paris (FR)
(72) Inventeur: Hagnere, Raymond, 80000 Amiens (FR); Jaccod, Michel, 94500 Champigny S/Marne (FR)
(74) Mandataire: Gamonal, Didier

(56) Documents cités:
- EP-A- 0 252 600
- DE-A- 2 605 623
- FR-A- 2 711 752

## Description

L'invention se rapporte à un couvercle de mécanisme d'embrayage, notamment pour véhicule automobile, à fixer centré sur un plateau de réaction, la fixation du couvercle sur le plateau de réaction s'effectuant par au moins trois plages de fixation réparties à espacement angulaire régulier sur une couronne à la périphérie externe de l'embrayage, chaque plage comportant, sur le plateau de réaction, une paire de trous taraudés et, entre ces trous, un pion de centrage, et, dans le couvercle, des orifices propres d'une part à venir s'engager sans jeu sensible radial et circulaire sur les pions de centrage, et d'autre part à laisser passer des vis qui s'engagent dans les trous taraudés du plateau de réaction pour solidariser le couvercle au plateau.

Un tel couvercle est connu par exemple de FR-A-2 300 933.

Alors que les mécanismes d'embrayage, comprenant essentiellement un couvercle, un plateau de pression attelé en rotation au couvercle par des languettes et mobile axialement sous les actions antagonistes d'un diaphragme à élasticité axiale et d'une butée d'embrayage, et un disque de friction couplé en rotation à un arbre d'entrée d'une transmission, sont conçus et fabriqués par un équipementier avec des particularités déterminées principalement par le couple à transmettre et la vitesse de rotation maximale admissible, les plateaux de réaction, contre lesquels sont serrés les disques de friction sous la poussée du plateau de pression, créée par le diaphragme, sont conçus généralement en fonction du moteur et du véhicule qui en est équipé par le constructeur.

Le montage du couvercle de mécanisme d'embrayage sur le plateau de réaction, celui-ci constitué souvent par un volant, doit s'effectuer en assurant la coaxialité des éléments tournants, et l'absence de tout balourd sensible, en raison des efforts centrifuges créés par la vitesse de rotation des moteurs modernes. Cela est obtenu en prévoyant au moins trois plages de fixation, réparties à espacement angulaire régulier pour éviter un balourd systématique, chaque plage comportant; dans le plateau de réaction, une paire de trous taraudés et un pion de centrage intermédiaire, et, sur le couvercle, des orifices propres, d'une part à venir s'engager, sans jeu sensible radial et circulaire sur les pions de centrage, pour éviter un balourd accidentel, et, d'autre part à laisser passer des vis qui s'engagent dans les trous taraudés du plateau de réaction, pour solidariser le couvercle au plateau de réaction.

Les constructeurs prévoient des répartitions angulaires, et radiales spécifiques des trous taraudés et pions de centrage sur les plages de fixation des plateaux de réaction, notamment volants, dont ils équipent leurs moteurs de véhicules. La répartition des trous taraudés et pions de centrage est en particulier déterminée par des contraintes de construction des plateaux de réaction.

Les couvercles de mécanismes d'embrayage agréés par un constructeur pour un véhicule équipé d'un plateau de réaction particulier doivent présenter des orifices pour le passage de vis de fixation, et l'engagement des pions de centrage avec une répartition angulaire et radiale correspondant à celle des plateaux de réaction particuliers sur lesquels ils doivent se monter.

On observera d'ailleurs que, si les orifices correspondant aux trous taraudés comportent un léger jeu autour des vis de fixation, ceux qui correspondent aux pions de centrage doivent être positionnés avec une grande précision, pour interdire tout jeu sensible.

Jusqu'à présent, lorsque des mécanismes d'embrayage pouvaient satisfaire à une pluralité de cahiers des charges, l'équipementier se voyait contraint de prévoir une pluralité de types de couvercle, chaque type de couvercle présentant une répartition angulaire et radiale des orifices de passage des vis de fixation et d'engagement des pions de centrage correspondant à la répartition des trous taraudés et pions de centrage définie par le constructeur pour le type spécifique de plateau de réaction.

Ces pratiques présentaient des inconvénients: chaque type de couvercle exigeait un outillage particulier coûteux, au moins pour l'exécution des orifices; les séries de mécanismes avec un couvercle particulier étaient courtes; en outre, il existait des risques de confusion entre types au stockage et à la livraison, particulièrement dommageable avec des constructeurs qui travaillent à flux tendus, pratiquement sans stocks.

Pour pallier ces inconvénients, l'invention propose un couvercle de mécanisme d'embrayage, notamment pour véhicule automobile, à fixer centré sur un plateau de réaction, la fixation du couvercle sur le plateau de réaction s'effectuant par au moins trois plages de fixation réparties à espacement angulaire régulier sur une couronne à la périphérie externe de l'embrayage, chaque plage comportant, sur le plateau de réaction, une paire de trous taraudés et, entre ces trous, un pion de centrage, et, dans le couvercle, des orifices propres d'une part à venir s'engager sans jeu sensible radial et circulaire sur les pions de centrage, et d'autre part à laisser passer des vis qui s'engagent dans les trous taraudés du plateau de réaction pour solidariser le couvercle au plateau, caractérisé en ce que, le couvercle étant prévu pour s'adapter à une pluralité de types de plateaux de réaction, chaque type se distinguant par une répartition angulaire et radiale particulière des trous taraudés et pions de centrage, les orifices du couvercle s'évident en cercles primitifs avec des répartitions angulaires et radiales correspondant à celles des trous taraudés et pions de centrage de la pluralité de types de plateaux et, en outre, lorsque existent des arcs intersécants de cercles primitifs, la périphérie des orifices s'écarte de celle de ces cercles au moins sur les arcs intersécants pour ne les suivre que sur des arcs, dits réservés, les arcs réservés des orifices correspondant aux pions de centrage s'étendant de part et d'autre d'une direction radiale de l'embrayage.

On observera que la disposition selon laquelle les arcs réservés des orifices correspondant aux pions de centrage s'étendent de part et d'autre d'une direction radiale de l'embrayage assure un positionnement du couvercle sur le plateau de réaction sans jeu sensible radial et circulaire. En effet, un décentrage du couvercle par rapport au plateau de réaction se traduirait par des composantes de déplacement du centre des arcs réservés par rapport aux axes des pions correspondants, dont au moins une est interdite par la butée du pion sur l'arc réservé, tandis qu'une rotation centrée du couvercle par rapport au plateau se traduirait par un déplacement tangentiel du pion par rapport à l'arc réservé, interdit par la butée de chaque pion sur l'arc réservé correspondant.

De préférence, les arcs réservés des orifices correspondant aux pions de centrage s'étendent de part et d'autre d'une direction radiale sur au moins 90°. Cette disposition correspond à un maximum de précision du centrage, tout début de déplacement du couvercle par rapport au plateau étant interdit par la butée d'au moins la moitié des pions de centrage sur un arc réservé correspondant, et suivant une direction radiale du pion.

La plupart des plateaux de réaction comportent trois plages de fixation, les pions étant alors disposés aux angles d'un triangle équilatéral de cercle circonscrit centré sur l'axe du plateau de réaction, ce qui assure une précision optimale du centrage.

De préférence, en cas d'intersection de cercles primitifs, le raccordement des arcs réservés s'effectue par des lumières de largeur constante, ce qui donne des configurations d'orifices d'usinage plus aisé.

En disposition préférée, le couvercle possède un rebord périphérique définissant au moins les plages de fixation, et ce rebord est déprimé sur une zone englobant les orifices correspondant aux pions de centrage, en sorte de ménager sur cette zone, entre rebord et plateau de réaction, un espace, alors qu'au-delà de cette zone, le rebord porte à plat sur le plateau de réaction, au moins sur l'étendue de la plage de fixation en dehors de la zone déprimée.

Diverses caractéristiques secondaires et des avantages de l'invention ressortiront d'ailleurs de la description qui va suivre, à titre d'exemple, en référence aux dessins annexés dans lesquels:
La figure 1 est une vue d'ensemble, en plan et de l'extérieur, d'un couvercle selon l'invention;
La figure 2 est une coupe suivant le tracé II-II de la figure 1;
La figure 3 est une vue, à plus grande échelle, d'une plage de fixation du couvercle de la figure 1;
La figure 4 est une coupe suivant le tracé IV-IV de la figure 3.

Selon le mode de réalisation de l'invention choisi et représenté sur les figures, le couvercle de mécanisme d'embrayage 1 est entièrement classique, à l'exception de trois plages de fixation 10, 20, et 30, formées dans un rebord périphérique globalement plat. Ces plages 10, 20, 30 ont même forme, et se répètent à 120° sur la périphérie du couvercle, en sorte de n'introduire aucun balourd lors d'une rotation autour d'un axe général de l'embrayage. Ces plages se divisent en zones centrales 10a, 20a, 30a, et zones latérales 10b, 10c; 20b, 20c; 30b, 30c.

Dans chacune des zones centrales 10a, 20a, 30a sont pratiqués deux orifices 11, 12; 21, 22; 31, 32. Les orifices 11, 21, 31 sont disposés sur des directions radiales bissectrices des plages 10, 20, 30, tandis que les orifices 12, 22, 32, sont déportés angulairement vers les zones latérales 10c, 20c, 30c. Dans chacune des zones latérales 10b, 10c; 20b, 20c; 30b, 30c sont pratiqués deux orifices, respectivement 13, 15; 14, 16; 23, 25; 24, 26; 33, 35; 34, 36, symétriques par paires 13, 14; 15, 16; 23, 24; 25, 26; 33, 34; 35, 36, par rapport à des directions radiales bissectrices des plages de fixation respectives 10, 20, 30.

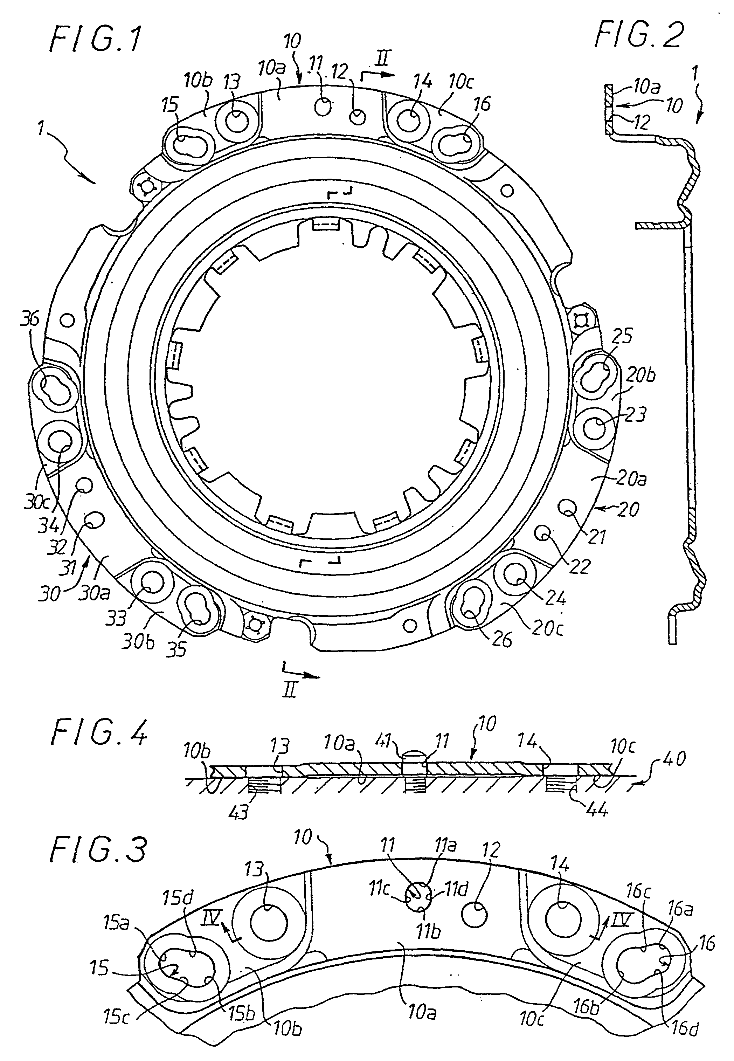

Comme on le voit mieux sur la figure 3, sur la plage de fixation 10 donnée en exemple, l'orifice 11 possède une périphérie qui se compose de deux demi-circonférences, 11a vers la périphérie extérieure et 11b vers la périphérie intérieure de la plage 10, centrées sur une direction radiale bissectrice de cette plage 10, et raccordées par des segments de droites 11c, 11d parallèles à la direction radiale précédente. L'orifice 12, lui, est circulaire et de même rayon que les demi-circonférences 11a, 11b.

Ce qui est dit ici pour la plage 10 vaut pour les plages 20 et 30, les références numériques se répétant en changeant le chiffre des dizaines 1 en 2 et 3 respectivement.

On précise tout de suite que les orifices 11 et 12, conjointement avec les orifices homologues 21, 22; 31, 32, constituent trois jeux de logements pour des triades de pions de centrage implantés dans trois types de plateaux de réaction, un jeu où les pions de centrage portent sur les demi-circonférences 11a, 21a, 31a, vers la périphérie extérieure des plages 10, 20, 30, un jeu où les pions de centrage portent sur les demi-circonférences 11b, 21b, 31b vers la périphérie intérieure de plages, et un jeu où les pions s'engagent dans les orifices 12, 22, 32.

On observera que, si l'on avait usiné deux trous circulaires (cercles primitifs) à l'emplacement de l'orifice 11, avec le rayon des demi-circonférences et de centres sur une direction radiale bissectrice de la plage 10, écartés de la longueur des segments 11c, 11d, on aurait retrouvé les demi-circonférences 11a, 11b, à leur place, mais les cercles primitifs auraient été intersécants et d'usinage délicat. Les demi-circonférences 11a, 11b constituent des arcs utiles au centrage, qui seront dits réservés car ils subsistent des cercles primitifs, alors qu'autour des arcs d'intersection, entre les arcs réservés la périphérie de l'orifice 11 s'écarte des circonférences des cercles primitifs pour suivre les segments 11c, 11d. Les orifices oblongs 11, 21, 31 portent en effet sur les pions de centrage soit par les arcs réservés 11a, 21a, 31a, soit par les arcs réservés 11b, 21b, 31b, ces arcs s'étendant sur 180° répartis également de part et d'autre d'une direction radiale bissectrice des plages 10, 20, 30, et assurent de ce fait un centrage aussi précis que s'il s'agissait des cercles primitifs.

Les zones latérales 10b et 10c sont symétriques par rapport à une direction radiale bissectrice de la plage 10, et comportent respectivement chacune un orifice circulaire 13, 14 et un orifice 15, 16, issu de deux cercles primitifs, plus espacé angulairement de la direction radiale bissectrice de la plage 10. Les orifices 15, 16 ont leur périphérie constituée de deux arcs réservés 15a, 15b et 16a, 16b raccordés par des segments de droite 15c, 15d, parallèles, et 16c, 16d, parallèles, qui bordent des lumières de largeur constante, égale au diamètre des cercles primitifs dont sont issus les arcs réservés 15a et 16a, respectivement.

Les orifices 13, 14, 15, 16 sont issus de trois paires de cercles primitifs dont la répartition angulaire et radiale correspond à celles des trous taraudés de trois types de plateaux de réaction particuliers. Il va sans dire que les diamètres des cercles primitifs sont en rapport avec ceux des trous taraudés correspondant des plateaux de réaction particuliers, puisqu'ils sont destinés à laisser passer les vis de fixation avec le jeu mécanique usuel.

On voit sur la figure 4 un plateau de réaction 40 qui comporte, sur sa plage correspondant à la plage 10, un pion de centrage 41 engagé dans l'orifice 11, et portant sur l'arc réservé 11a, et symétriquement de part et d'autre du pion 41, deux trous taraudés 43 et 44 axialement alignés sur les orifices 13 et 14 respectivement.

Sur cette figure 4, on voit également que la zone centrale 10a de la plage 10 est déprimée (vue par en dessous sur cette figure) par rapport aux zones latérales 10b et 10c, de sorte que ces zones latérales portent à plat sur le plateau de réaction 40, tandis qu'il existe un espace entre la zone centrale 10a et le plateau 40. Cette disposition évite que des bavures ou des corps étrangers au voisinage de la racine du pion 41 ne viennent altérer le centrage du couvercle 1 sur le plateau de réaction 40.

Dans l'exemple représenté figure 4, les orifices correspondant à la répartition angulaire et radiale du plateau de réaction 40 particulier sont la paire 13, 14 et l'orifice 11 pour un pion de centrage portant sur l'arc réservé 11a. Pour un autre type de plateau de réaction, on utilisera la paire 15, 16 avec les arcs réservés 15b, 16b, et l'orifice 11 avec l'arc réservé 11b. Pour un troisième type de plateau de réaction, on utilisera la paire 15, 16 avec les arcs réservés 15a, 16a, et l'orifice 12 pour le pion de centrage, dans ce cas déporté latéralement par rapport à la bissectrice de la paire de trous taraudés.

On comprendra que les répartitions des orifices dans les plages de fixation du couvercle sont déterminées par les répartitions des trous taraudés et pions de centrage fixées par les constructeurs, et que les exemples donnés plus haut n'ont rien de limitatif.

Bien entendu, l'invention n'est pas limitée aux exemples décrits, mais en embrasse toutes les variantes d'exécution, dans le cadre des revendications.

## Revendications

1. Couvercle de mécanisme d'embrayage (1), notamment pour véhicule automobile, à fixer centré sur un plateau de réaction (40), la fixation du couvercle (1) sur le plateau de réaction (40) s'effectuant par au moins trois plages (10, 20, 30) de fixation réparties à espacement angulaire régulier sur une couronne à la périphérie externe de l'embrayage, chaque plage (10, 20, 30) comportant, sur le plateau de réaction (40), une paire de trous taraudés (43, 44) et, entre ces trous, un pion de centrage (41), et, dans le couvercle (1), des orifices propres, d'une part (11, 12) à venir s'engager sans jeu sensible radial et circulaire sur les pions de centrage (41), et d'autre part (13, 14; 15, 16) à laisser passer des vis qui s'engagent dans les trous taraudés (43, 44) du plateau de réaction pour solidariser le couvercle (1) au plateau (40), **caractérisé en ce que**, le couvercle (1) étant prévu pour s'adapter à une pluralité de types de plateaux de réaction (40), chaque type se distinguant par une répartition angulaire et radiale particulière des trous taraudés (43, 44) et pions de centrage (41), les orifices du couvercle (11, 12, 13, 14, 15, 16) s'évidant en cercles primitifs avec des répartitions angulaires et radiales correspondant à celles des trous taraudés (43, 44) et pions de centrage (41) de la pluralité de types de plateaux et, en outre, lorsque existent des arcs intersécants de cercles primitifs, la périphérie des orifices (11, 15, 16) s'écarte de celle de ces cercles au moins sur les arcs intersécants pour ne les suivre que sur des arcs (11a, 11b, 15a, 15b, 16a, 16b), dits réservés, les arcs réservés (11a, 11b) des orifices (11) correspondant aux pions de centrage (41) s'étendant de part et d'autre d'une direction radiale de l'embrayage.

2. Couvercle selon la revendication 1, **caractérisé en ce que** les arcs réservés (11a, 11b) des orifices (11) correspondant aux pions de centrage (41) s'étendent de part et d'autre d'une direction radiale sur au moins 90°.

3. Couvercle selon l'une des revendications 1 et 2, **caractérisé en ce que** les plages de fixation (10, 20, 30) sont au nombre de trois.

4. Couvercle selon l'une quelconque des revendications 1 à 3, **caractérisé en ce que**, en cas d'intersection de cercles primitifs, le raccordement des arcs réservés (11a, 11b, 15a, 15b, 16a, 16b) s'effectue par des lumières de largeur constante.

5. Couvercle selon l'une quelconque des revendications 1 à 4, **caractérisé en ce que** le couvercle (1) possédant un rebord périphérique définissant au moins les plages de fixation (10, 20, 30), ce rebord est déprimé sur une zone (10a) englobant les orifices (11, 12) correspondant aux pions de centrage (41), en sorte de ménager sur cette zone (10a), entre rebord et plateau (40), un espace, alors qu'au-delà de cette zone, le rebord porte à plat sur le plateau de réaction, au moins sur l'étendue (10b, 10c) de la plage de fixation extérieure à la zone déprimée.

## Claims

1. Clutch-mechanism cover (1), especially for a motor vehicle, to be fixed centred on a reaction plate (40), the fixing of the cover (1) onto the reaction plate (40) being done by at least three fixing regions (10, 20, 30) distributed with regular angular spacing in a ring at the outer periphery of the clutch, each region (10, 20, 30) including a pair of tapped holes (43, 44) on the reaction plate (40), and a centring pin (41) between these holes, and, in the cover (1), orifices suitable, on the one hand (11, 12) for being engaged without substantial radial and circular play on the centring pins (41), and, on the other hand (13, 14; 15, 16) for letting through screws which are engaged in the tapped holes (43, 44) of the reaction plate in order to secure the cover (1) to the plate (40), **characterised in that**, with the cover (1) being intended to be fitted to a plurality of different types of reaction plates (40), each type being distinguished by a particular angular and radial distribution of the tapped holes (43, 44) and centring pins (41), the orifices of the cover (11, 12, 13, 14, 15, 16) open out into pitch circles with angular and radial distributions corresponding to those of the tapped holes (43, 44) and centring pins (41) of the plurality of types of plates and, moreover, when there exist intersecting arcs of pitch circles, the periphery of the orifices (11, 15, 16) deviates from that of these circles at least over the intersecting arcs so as to follow them only over arcs (11a, 11b, 15a, 15b, 16a, 16b), called reserved arcs, the reserved arcs (11a, 11b) of the orifices (11) corresponding to the centring pins (41) extending on either side of a radial direction of the clutch.

2. Cover according to Claim 1, **characterised in that** the reserved arcs (11a, 11b) of the orifices (11) corresponding to the centring pins (41) extend on either side of a radial direction over at least 90°.

3. Cover according to one of Claims 1 and 2, **characterised in that** the fixing regions (10, 20, 30) are three in number.

4. Cover according to any one of Claims 1 to 3, **characterised in that**, in the case of intersection of pitch circles, the reserved arcs (11a, 11b, 15a, 15b, 16a, 16b) are connected by slots of constant width.

5. Cover according to any one of Claims 1 to 4, **characterised in that**, with the cover (1) possessing a peripheral rim defining at least the fixing regions (10, 20, 30), this rim is depressed, over a area (10a) encompassing the orifices (11, 12) corresponding to the centring pins (41), so as to form a space over this area (10a) between rim and plate (40), whereas, beyond this area, the rim bears flat on the reaction plate, at least over the extent (10b, 10c) of the fixing region outside the depressed area.

## Patentansprüche

1. Deckel eines Kupplungsmechanismus (1), insbesondere für Kraftfahrzeuge, der zentriert an einer Gegenanpreßplatte (40) zu befestigen ist, wobei die Befestigung des Deckels (1) an der Gegenanpreßplatte (40) durch wenigstens drei Befestigungsbereiche (10, 20, 30) erfolgt, die in einem gleichmäßigen Winkelabstand auf einem Kranz am äußeren Umfang der Kupplung verteilt sind, wobei jeder Befestigungsbereich (10, 20, 30) an der Gegenanpreßplatte (40) ein Paar Gewindelöcher (43, 44) und zwischen diesen Löchern einen Zentrierstift (41) sowie im Deckel (1) Öffnungen umfaßt, die einerseits (11, 12) ohne merkliches radiales und kreisförmiges Spiel an den Zentrierstiften (41) eingreifen und andererseits (13, 14; 15, 16) Schrauben hindurchgehen lassen können, die in die Gewindelöcher (43, 44) der Gegenanpreßplatte eingesetzt werden, um den Deckel (1) fest mit der Gegenanpreßplatte (40) zu verbinden, **dadurch gekennzeichnet, daß**, der Deckel (1) für die Anpassung an eine Mehrzahl von Gegenanpreßplattentypen (40) vorgesehen ist, wobei sich jeder Typ durch eine besondere winkelmäßige und radiale Verteilung der Gewindelöcher (43, 44) und Zentrierstifte (41) unterscheidet, wobei die Öffnungen des Deckels (11, 12, 13, 14, 15, 16) in Grundkreisen mit winkelmäßigen und radialen Verteilungen ausgeschnitten sind, die denjenigen der Gewindelöcher (43, 44) und Zentrierstifte (41) der Mehrzahl von Plattentypen entsprechen, und daß außerdem, wenn Überschneidungen von Grundkreisen existieren, der Rand der Öffnungen (11, 15, 16) vom Umfang dieser Kreise wenigstens an den Überschneidungen abweicht, um ihnen nur auf sogenannten Reservebögen (11a, 11b, 15a, 15b, 16a, 16b) zu folgen, wobei die Reservebögen (11a, 11b) der den Zentrierstiften (41) entsprechenden Öffnungen (11) sich beiderseits einer radialen Richtung der Kupplung erstrecken.

2. Deckel nach Anspruch 1, **dadurch gekennzeichnet, daß** sich die Reservebögen (11a, 11b) der den Zentrierstiften (41) entsprechenden Öffnungen (11) beiderseits einer radialen Richtung über wenigstens 90° erstrecken.

3. Deckel nach einem der Ansprüche 1 oder 2, **dadurch gekennzeichnet, daß** die Anzahl der Befestigungsbereiche (10, 20, 30) drei beträgt.

4. Deckel nach einem der Ansprüche 1 bis 3, **dadurch gekennzeichnet, daß** im Falle einer Überschneidung von Grundkreisen der Anschluß der Reservebögen (11a, 11b, 15a, 15b, 16a, 16b) durch Langlöcher mit konstanter Breite erfolgt.

5. Deckel nach einem der Ansprüche 1 bis 4, **dadurch gekennzeichnet, daß** der Deckel (1) eine Umfangsrandleiste umfaßt, die wenigstens die Befestigungsbereiche (10, 20, 30) definiert, wobei diese Randleiste in einer Zone (10a) eingesenkt ist, welche die den Zentrierstiften (41) entsprechenden Öffnungen (11, 12) umschließt, so daß in dieser Zone (10a) zwischen der Randleiste und der Gegenanpreßplatte (40) ein Zwischenraum geschaffen wird, wobei jenseits dieser Zone die Randleiste flach an der Gegenanpreßplatte wenigstens auf der Ausdehnung (10b, 10c) des Befestigungsbereichs außerhalb der eingesenkten Zone aufliegt.
